# EUROPEAN PATENT SPECIFICATION

(11) **EP 0 506 635 B1**
(45) Date of publication and mention of the grant of the patent: **15.11.1995**
(21) Application number: 92850042.0
(22) Date of filing: 28.02.1992
(51) Int. Cl.: G02B 6/44

(54) **A coating cup having two fibre ribbon-cable inlets**
Beschichtungsküvette
Coupe de revêtement

(30) Priority: 25.03.1991 SE 9100893
(43) Date of publication of application: 30.09.1992
(73) Proprietor: TELEFONAKTIEBOLAGET L M ERICSSON, 126 25 Stockholm (SE)
(72) Inventor: Fickling, Peter Richard, S 824 00 Hudiksvall (SE); Ericsson, Mats Henrik, S-820 60 Delsbo (SE); Sundberg, Sven-Erik, S-824 00 Hudikssval (SE)
(74) Representative: Lövgren, Tage

(56) References cited:
- DE-A- 3 606 617

## Description

### TECHNICAL FIELD

The present invention relates to a coating cup by means of which a plurality of optical fibres can be joined together to form a fibre ribbon-cable while simultaneously coating said cable with two protective layers of a coating material, said cup having a central axis and comprises a body having an axially extentding truncated conical bore whose largest diameter lies on the fibre-inlet side and a cylindrical bore which merges with the conical bore, and which body further includes two diametrically opposed coating-material inlet channels, said cup further comprising a guide nozzle fitted into the conical bore of the body and having a conical outer surface and an axially extending truncated conical inlet bore which merges into an axially extending throughbore in a truncated conical outwardly protruding part at the end-wall of the guide nozzle, and first and second aligned spray nozzles inserted in the cylindrical bore of the body and functioning to apply said two layers of coating material, wherein the second spray nozzle has a truncated conical recess, circumferential grooves located opposite said inlet channels and in communication with distribution channels which extend inwardly from said grooves and open into the truncated conical recess.

### BACKGROUND ART

Coating cups which function to apply simultaneously two layers of coating material to an optical fibre are known from Swedish Patent Application 9002227-8. These coating cups, however, are intended only for a single fibre, and not for a plurality of fibres which are to be joined to form a fibre ribbon-cable. Thus, one drawback with known coating cups is that they are unable to join a plurality of fibres to form a ribbon-cable and to simultaneously coat said plurality of fibres with coating material.

A device for joining together a plurality of fibres to form a ribbon-cable by applying a plastic sheath around the fibres is known through DE-A-36 06 617. This device is however intended for optical fibres which in addition to being coated also are sheathed in a plastic cover, and accordingly this device is not a coating cup in the meaning of the present invention.

### DISCLOSURE OF THE INVENTION

The object of the present invention is to eliminate the drawbacks associated with earlier known devices and to provide a coating cup which will ensure precise covering of the fibres with coating material so that said fibres are closely packed in line with one another and lie fully concentrical in the protective layers, while coating said fibres in a manner such as to join the fibres together to form a ribbon-cable in the body without risk of wear by contact with the various nozzles. This object is achieved with a coating cup having the characteristic features set forth in the accompanying Claims.

The advantage afforded by the inventive coating cup is thus that the cup will produce a double-coated fibre ribbon-cable in one single operation and with great accuracy with regard to dimensions and concentricity, and that the cup is of simple construction and can be readily operated and serviced.

Further objects and advantages afforded by the inventive double-coating cup will be evident from the following detailed description of the invention, which is made with reference to a preferred exemplifying embodiment of the invention and also with reference to the accompanying drawings.

### BRIEF DESCRIPTION OF THE DRAWINGS

Figure 1 is an axial section view of an inventive coating body, taken on the line 1-1 in Figure 4.

Figure 2 is an enlarged sectional view of a part of Figure 1, taken on the line 2-2 in Figure 3 and Figure 4.

Figure 3 is a cross-sectional view of the coating body, taken on the line 3-3 in Figure 2.

Figure 4 is another cross-sectional view of the coating body, taken on the line 4-4 in Figure 1 and Figure 2.

### BEST MODE OF CARRYING OUT THE INVENTION

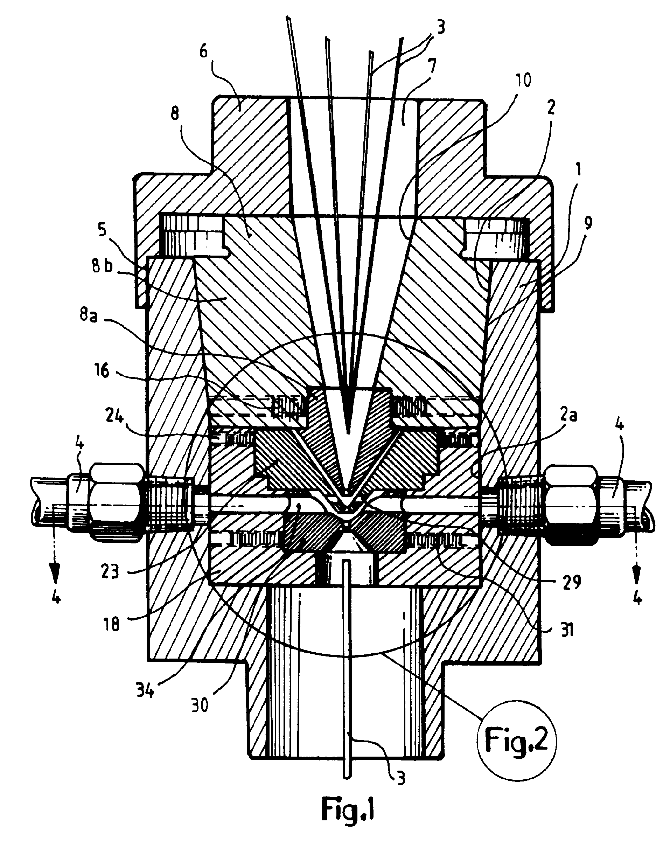

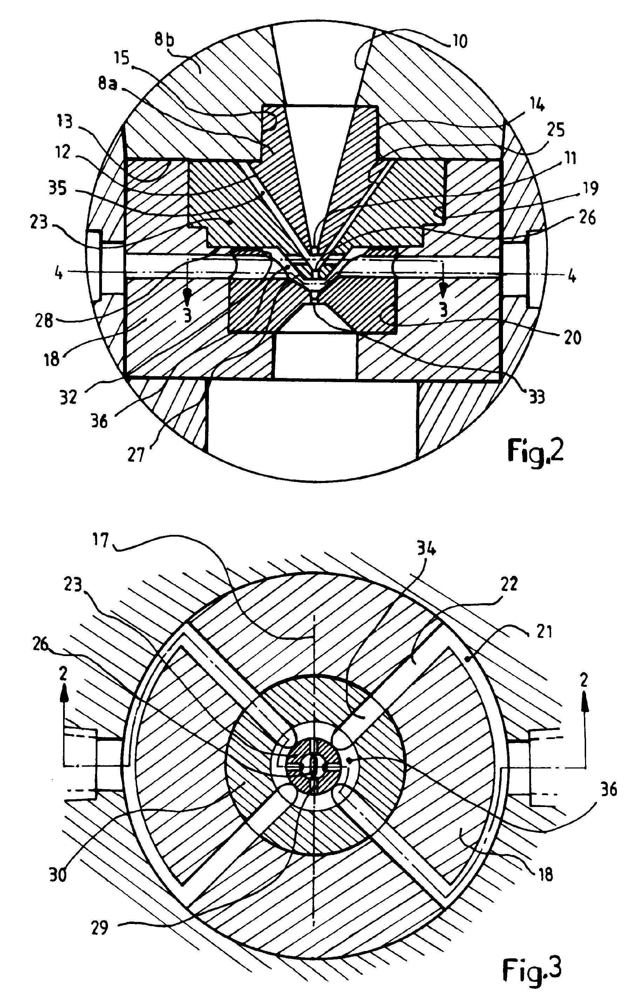

The coating cup illustrated in Figure 1 and in the enlarged Figure 2 illustration includes a body 1 having a truncated, conical bore 2 whose largest diameter is located on the fibre-inlet side and receives a plurality of fibres 3, for instance four fibres, to be joined together and coated with two protective layers of coating material. The bore 2 merges with a cylindrical bore 2a, in which spray nozzles are inserted, as described herebelow. The body 1 includes two inlet channels 4 which diametrically oppose one another at an axial distance from the inlet side. The inlet channels 4 are connected to pressurized coating material containers in a manner not shown, with the aid of nipples and supply conduits. The body 1 has on the inlet side thereof a part 5 which is provided with an external screw thread for coaction with a holding nut 6 which has a central opening 7 for accommodation of the incoming fibres 3, and which functions to hold together the component parts of the body 1, as described in more detail herebelow.

A guide nozzle 8 having a truncated, conical guide surface 9, corresponding to the bore 2, is inserted in the body 1. The guide nozzle 8 includes two parts 8a and 8b which together define a truncated, conical bore 10 which terminates in a guide bore 11 of elongated section adapted to the fibre ribbon-cable and located in a conical, outwardly projecting part 12 in the end-wall 13 of the guide nozzle. The first part 8a of the guide nozzle, said part including the conical, outwardly extending part 12, has a cylindrical side surface 14 and is mounted in a corresponding cylindrical bore 15 in the other nozzle part 8b, and is centered and held therein by means of adjusting screws 16. The conical, outwardly projecting part 12 is preferably bevelled towards the outlet end, parallel with the longitudinal axis 17 of the guide bore 11.

A holder 18 for two spray nozzles is firmly pressed into the cylindrical bore 2a. The holder 18 has a first cylindrical bore 19 and a second cylindrical bore 20, each of which accommodates a respective spray nozzle, and also presents circular grooves 21 which lie opposite to and form channels for distributing the coating material entering through the inlet channels 4, said grooves extending approximately one-quarter of a circle around the holder, as illustrated clearly to the right of Figure 3. This Figure also shows that the grooves 21 connect with radial bores 22 which open into the second cylindrical bore 20. The radial bores 22 are four in number and are mutually separated by an angle of 90°, so as to distribute coating material uniformly in the spray nozzles, as explained in more detail herebelow.

A first spray nozzle 23 is loosely inserted in the first cylindrical bore 19 of the holder 18. The spray nozzle is centered and held in the holder by means of four adjusting screws 24, and is provided with a truncated, conical recess 25 which merges with a nozzle bore 26 of elongated section adapted to the fibre ribbon-cable. The nozzle bore 26 opens into a conical, outwardly projecting part 27 in the end-wall 28 of the spray nozzle. This outwardly projecting part is provided with four radial bores 29 which open into the recess 25. A second spray nozzle 30 is loosely inserted into the second bore 20 of the holder 18, and is centered and held in said bore by means of four adjusting screws 31. This second spray nozzle has a truncated, conical recess 32 which merges with a nozzle bore 33 of elongated section adapted to the fibre ribbon-cable. The spray nozzle 30 is also provided with four radial bores 34 which open into the recess 32.

The first cylindrical spray nozzle 23 in the holder 18 is positioned in relation to the guide nozzle 8 such as to form a first gap 35 between the recess 25 and the outwardly projecting part 12 of the guide nozzle. The second spray nozzle 30 is positioned in the holder 18 in relation to the first cylindrical spray nozzle 23 such as to form a second gap 36 between the outwardly projecting part 27 of the spray nozzle 23 and the recess 32 in the spray nozzle 30. Coating material introduced through the inlet channels 4 and from there in through the radial bores 22 will first enter the second gap 36, through the radial bores 34 in the second spray nozzle 30. Part of the coating material passes from the second gap 36 to the first gap 35, through the radial bores 29 in the first spray nozzle 23. The spaces between mutually adjacent fibres 3 are filled with coating material in the first gap 35 while the fibres are, at the same time, pressed together so as to lie contiguous with one another in a straight line, whereafter the fibres are finally coated and joined together in the second gap 36.

As will be seen from Figure 3, the radial bores 29 are so positioned in relation to the nozzle bore 26 that coating material will enter the gap 35 immediately axially in line with the longitudinal axis 17 of the nozzle bore 26, and thus in line with the long axis of the fibre ribbon-cable, and also at right angles to said long axis. The bores 29 thus distribute the coating material uniformly in the gap 35 around the incoming fibres 3, and partly at right angles to the axis 17 so that the material will fill the space between mutually adjacent fibres, and also axially in line with said long axis 17, so that the fibres are pressed tightly into contact with one another, whereby the fibres are, at the same time, accurately centered in the nozzle and coated uniformly with coating material.

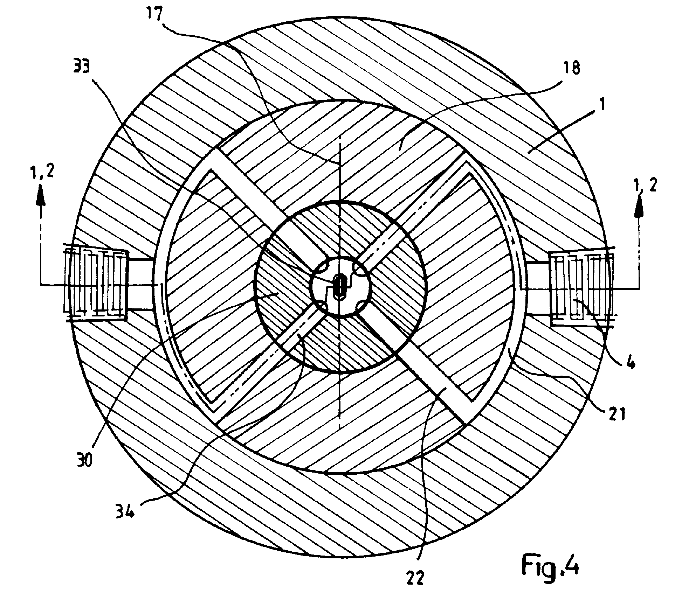

Correspondingly, as shown in Figure 4, the radial bores 34 are so positioned in relation to the nozzle bore 33 that coating material will enter the gap 36 at an angle of 45° to the longitudinal axis 17 of the nozzle bore 33, and therewith to the long axis of the fibre ribbon-cable. The bores 34 thus distribute the coating material uniformly in the gap 36 and around the fibres 3 first positioned and coated in the gap 35, thereby centering the fibres in the nozzle and coating said fibres uniformly with a second coating of coating material while, at the same time, joining the fibres together to form a fibre ribbon-cable.

The guide bore 11, the nozzle bore 26 and the nozzle bore 33 may, of course, all be positioned so that respective longitudinal axes will lie parallel with one another. The guide nozzle 8, the first spray nozzle 23 and the second spray nozzle 30 may also be centered and adjusted by means of the adjusting screws 16 and 24 so that said bores will lie in line with one another.

The aforementioned coating material is preferably a UV-hardening acrylate, although other materials may be used, of course. A UV-setting dye may also be admixed with the acrylate, so as to provide a colour-marked cable at the same time as the fibres are protectively coated and joined together.

It will be understood that the invention is not restricted to the aforedescribed and illustrated exemplifying embodiment thereof, and that modifications can be made within the scope of the following Claims.

## Claims

1. A coating cup by means of which a plurality of optical fibres (3) can be joined together to form a fibre ribbon-cable while simultaneously coating said cable with two protective layers of a coating material, said cup having a central axis and comprising a body (1) having an axially extending truncated conical bore (2) whose largest diameter lies on the fibre-inlet side and a cylindrical bore (2a) which merges with the conical bore, and which body (1) further includes two diametrically opposed coating-material inlet channels (4), said cup further comprising a guide nozzle (8) fitted into the conical bore (2) of the body (1) and having a conical outer surface (9) and an axially extending truncated conical inlet bore (10) which merges into an axially extending throughbore in a truncated conical outwardly protruding part (12) at the end-wall of the guide nozzle (8), and first and second aligned spray nozzles (23, 30) inserted in the cylindrical bore (2a) of the body (1) and functioning to apply said two layers of coating material, wherein the second spray nozzle (30) has a truncated conical recess (32), and circumferential grooves (21) located opposite said inlet channels (4) and in communication with distribution channels (34) which extend inwardly from said grooves and open into the truncated conical recess (32), **characterized** in that the inlet bore (10) of the guide nozzle (8) merges with a guide bore (11) in the outwardly projecting part (12) of the guide nozzle (8), said guide bore (11) having an elongated cross-section and being adapted to the shape of the fibre ribbon-cable; in that the first spray nozzle (23) has an axially extending truncated conical recess (25) and a first nozzle bore (26) of elongated cross-section into which said recess (25) of the first nozzle bore (26) emerges, wherein said first nozzle bore (26) is located in a conical outwardly projecting part (27) in the end-wall (28) of the first spray nozzle; in that the conical outwardly projecting part (27) of the first spray nozzle (23) is provided with distribution channels (29) which open into the truncated conical recess (25) and extend perpendicular to the axis; in that the first spray nozzle is so arranged in relation to the guide nozzle (8) as to form a first coating-material gap (35) between the guide nozzle (8) and the first spray nozzle (23); in that the truncated conical recess (32) in the second spray nozzle (30) merges with a second nozzle bore (33) of elongated cross-section; and in that the second spray nozzle (30) is so arranged in relation to the first spray nozzle (23) as to form a second coating-material gap (36) between the two spray nozzles (23, 30), wherein the distribution channels (29) in the first spray nozzle (23) are arranged with respect to the inlet channels (4) in the body (1) so as to distribute the coating material supplied via the inlet channels (4) and the radial bores (34) in the second spray nozzle (30) uniformly in the first and second gap, respectively.

2. A coating cup according to Claim 1, **characterized** in that the distribution channels (29, 34) in the spray nozzles (23, 30) have the form of radial bores spaced uniformly around the circumference of said nozzles and opening into the truncated, conical recesses (25, 32).

3. A coating cup according to Claim 2, **characterized** in that the radial bores (29) in the first spray nozzle (23) are positioned in relation to the nozzle bore (26) such that the exit orifices of two of said bores are axially in line with the longitudinal axis (17) of said bore, and such that the exit orifices of another two of said bores are perpendicular to the longitudinal axis of said bore.

4. A coating cup according to Claim 2, **characterized** in that the radial bores (34) in the second spray nozzle (30) are positioned in relation to the nozzle bore (33) such that the exit orifices of said bores are located at an angle of 45° to the longitudinal axis (17) of said bore.

5. A coating cup according to Claim 3 or 4, **characterized** in that both the first (23) and the second spray nozzle (30) are loosely fitted in a cylindrical holder (18) in the cylindrical bore (2a) and are held and centered in said holder by means of screws (24, 31).

6. A coating cup according to Claim 5, **characterized** in that the guide nozzle (8) comprises two parts (8a, 8b), of which that part (8a) which is located against the first spray nozzle (23) and contains the conically outwardly projecting part (12) is held and centered in the second part (8b) by means of screws (16).

7. A coating cup according to any one of the preceding Claims, **characterized** in that the second gap (36) between said spray nozzles tapers towards the outlet side.

8. A coating cup according to any one of the preceding Claims, **characterized** in that the conical, outwardly projecting part (12 or 27) of the guide nozzle (8) and/or of the first spray nozzle (23) is bevelled parallel with the longitudinal axis (17) of said guide bore (11) or the nozzle bore (26) respectively.

## Patentansprüche

1. Beschichtungsküvette, mit der eine Vielzahl von optischen Fasern (3) zur Bildung eines Faserbandkabels zusammengefaßt werden können, während das Kabel gleichzeitig mit zwei Schutzschichten eines Beschichtungsmaterials beschichtet wird, wobei die Küvette eine Zentralachse aufweist und einen Körper umfaßt, der eine sich axial erstreckende Kegelstumpfbohrung (2), dessen größter Durchmesser auf der Fasereinlaßseite liegt und eine zylindrische Bohrung (2a) aufweist, die in die Kegelstumpfbohrung übergeht, und wobei der Körper (1) ferner zwei diametral gegenüberliegende Beschichtungsmaterial-Einlaßkanäle (4) umfaßt, wobei die Küvette ferner umfaßt: eine Führungsdüse (8), die in die Kegelstumpfbohrung (2) des Körpers (1) eingepaßt ist und eine konische äußere Oberfläche (9) und eine sich axial erstreckende Kegelstumpf-Einlaßbohrung (10) aufweist, die in eine sich axial erstreckende Durchbohrung in einem kegelstumpfartigen nach außen vorstehenden Teil (12) an der Endwand der Führungsdüse (8) übergeht, und erste und zweite ausgerichtete Sprühdüsen (23, 30), die in die zylindrische Bohrung (2a) des Körpers (1) eingefügt sind und zur Anbringung der zwei Schichten des Beschichtungsmaterials dienen, wobei die erste Sprühdüse (30) eine kegelstumpfartige Ausnehmung (32) und am Umfang liegende Ausnehmungen (21) aufweist, die gegenüberliegend zu den Einlaßkanälen (4) angeordnet sind und in Verbindung mit Verteilungskanälen (34) stehen, die sich von der Ausnehmung innerhalb erstrecken und sich in die kegelstumpfartige Ausnehmung (32) hinein erstrecken,
dadurch gekennzeichnet, daß
die Einlaßbohrung (10) der Führungsdüse (8) in eine Führungsbohrung (11) in dem nach außen vorstehenden Teil (12) der Führungsdüse (8) übergeht, wobei die Führungsbohrung (11) einen länglichen Querschnitt aufweist und an die Gestalt des Faserbandkabels angepaßt ist; daß die erste Sprühdüse (23) eine sich axial erstreckende kegelstumpfartige Ausnehmung (25) und eine erste Düsenbohrung (26) eines länglichen Querschnitts aufweist, in die die Ausnehmung (25) der ersten Düsenbohrung (26) übergeht, wobei die erste Düsenbohrung (26) in einem konischen nach außen vorstehenden Teil (27) in der Endwand (28) der ersten Sprühdüse angeordnet ist; daß der konische nach außen vorstehende Teil (27) der ersten Sprühdüse (23) mit Verteilungskanälen (29) versehen ist, die sich in die kegelstumpfartige Ausnehmung (25) hinein öffnen und senkrecht zu der Achse verlaufen; daß die erste Sprühdüse in Bezug zu der Führungsdüse (8) so angeordnet ist, um einen ersten Beschichtungsmaterialspalt (35) zwischen der Führungsdüse (8) und der ersten Sprühdüse (23) zu bilden; daß die kegelstumpfartige Ausnehmung (32) in der zweiten Sprühdüse (30) in eine zweite Düsenbohrung (33) eines länglichen Querschnitts übergeht; und daß die zweite Sprühdüse (30) in Bezug zu der ersten Sprühdüse (23) so angeordnet ist, um einen zweiten Beschichtungsmaterialspalt (36) zwischen den zwei Sprühdüsen (23, 30) zu bilden, wobei die Verteilungskanäle (29) in der ersten Sprühdüse (23) in Bezug zu den Einlaßkanälen (4) in dem Körper (1) so angeordnet sind, um das über die Einlaßkanäle (4) und die radialen Bohrungen (34) in der zweiten Sprühdüse (30) zugeführte Beschichtungsmaterial gleichmäßig in dem ersten bzw. zweiten Spalt zu verteilen.

2. Beschichtungsküvette nach Anspruch 1, dadurch gekennzeichnet, daß die Verteilungskanäle (29, 34) in den Sprühdüsen (23, 30) die Form von radialen Bohrungen aufweisen, die gleichmäßig um den Umfang der Düsen angeordnet sind und sich in die kegelstumpfartigen Ausnehmungen (25, 32) hinein öffnen.

3. Beschichtungsküvette nach Anspruch 2, dadurch gekennzeichnet, daß die radialen Bohrungen in der ersten Sprühdüse (23) in Bezug zu der zweiten Bohrung (26) so angeordnet sind, daß die Ausgangsöffnungen von zwei der Bohrungen axial ausgerichtet zu der Längsachse (17) der Bohrung sind, und so, daß die Ausgangsöffnungen von anderen zwei der Bohrungen senkrecht zu der Längsachse der Bohrung sind.

4. Beschichtungsküvette nach Anspruch 2, dadurch gekennzeichnet, daß die radialen Bohrungen (34) in der zweiten Sprühdüse (30) in Bezug zu der Düsenbohrung (33) so positioniert sind, daß sich die Ausgangsöffnungen der Bohrungen in einem Winkel von 45° zu der Längsachse (17) der Bohrung befinden.

5. Beschichtungsküvette nach Anspruch 3 oder 4, dadurch gekennzeichnet, daß sowohl die erste Sprühdüse (23) als auch die zweite Sprühdüse (30) lose in einen zylindrischen Halter (18) in der zylindrischen Bohrung (2a) eingepaßt und in dem Halter mittels Schrauben (24, 31) gehalten und zentriert sind.

6. Beschichtungsküvette nach Anspruch 5, dadurch gekennzeichnet, daß die Führungsdüse (8) zwei Teile (8a, 8b) umfaßt, von denen derjenige Teil (8a), der an der ersten Sprühdüse (23) angeordnet ist und den konischen nach außen vorstehenden Teil (12) enthält, in dem zweiten Teil (8b) mittels Schrauben (16) gehalten und zentriert wird.

7. Beschichtungsküvette nach einem der vorangehenden Ansprüche, dadurch gekennzeichnet, daß der zweite Spalt (36) zwischen den Sprühdüsen sich in Richtung auf die Auslaßseite verjüngt.

8. Beschichtungsküvette nach einem der vorangehenden Ansprüche, dadurch gekennzeichnet, daß der konische, nach außen vorstehende Teil (12 oder 27) der Führungsdüse (8) und/oder der ersten Sprühdüse (23) parallel zu der Längsachse der Führungsbohrung (11) bzw. der Düsenbohrung (26) abgeschrägt ist.

## Revendications

1. Godet d'enduction au moyen duquel plusieurs fibres optiques (3) peuvent être jointes les unes aux autres pour former un câble plat de fibres tout en enduisant simultanément ledit câble de deux couches protectrices en matière de revêtement, ledit godet ayant un axe central et comprenant un corps (1) présentant une lumière tronconique (2) s'étendant axialement dont le plus grand diamètre s'étend sur le côté d'entrée de fibres et une lumière cylindrique (2a) qui rejoint la lumière conique, et lequel corps (1) présente en outre deux canaux diamétralement opposés (4) d'entrée de matière de revêtement, ledit godet comportant en outre une buse (8) de guidage montée dans la lumière conique (2) du corps (1) et présentant une surface extérieure conique (9) et une lumière tronconique (10) d'entrée s'étendant axialement qui aboutit dans une lumière traversante, s'étendant axialement, dans une partie tronconique (12) faisant saillie vers l'extérieur à la paroi extrême de la buse (8) de guidage, et des première et seconde buses alignées (23, 30) de pulvérisation insérées dans la lumière cylindrique (2a) du corps (1) et fonctionnant de façon à appliquer lesdites deux couches de matière de revêtement, la seconde buse (30) de pulvérisation présentant un évidement tronconique (32), et des gorges circonférentielles (21) étant situées de façon à être opposées auxdits canaux (4) d'entrée en communication avec des canaux (34) de distribution qui s'étendent vers l'intérieur depuis lesdites gorges et débouchent dans l'évidement tronconique (32), caractérisé en ce que la lumière (10) d'entrée de la buse (8) de guidage rejoint une lumière (11) de guidage dans la partie (12) faisant saillie vers l'extérieur de la buse (8) de guidage, ladite lumière (11) de guidage ayant une section transversale allongée et étant adaptée à la forme du câble plat à fibres ; en ce que la première buse (23) de pulvérisation présente un évidement tronconique (25) s'étendant axialement et une première lumière de buse (26) de section transversale allongée dans laquelle ledit évidement (25) de la première lumière (26) de buse émerge, ladite première lumière (26) de buse étant située dans une partie conique (27) faisant saillie vers l'extérieur dans la paroi extrême (28) de la première buse de pulvérisation ; en ce que la partie conique (27) faisant saillie vers l'extérieur de la première buse (23) de pulvérisation est pourvue de canaux (29) de distribution qui débouchent dans l'évidement tronconique (25) et s'étendent perpendiculairement à l'axe ; en ce que la première buse de pulvérisation est agencée par rapport à la buse (8) de guidage de façon qu'un premier intervalle (35) de matière de revêtement soit formé entre la buse (8) de guidage et la première buse (23) de pulvérisation ; en ce que l'évidement tronconique (32) dans la seconde buse (30) de pulvérisation rejoint une seconde lumière de buse (33) de section transversale allongée ; et en ce que la seconde buse (30) de pulvérisation est agencée par rapport à la première buse (23) de pulvérisation de façon qu'un second intervalle (36) pour matière de revêtement soit formé entre les deux buses (23, 30) de pulvérisation, les canaux (29) de distribution dans la première buse (23) de pulvérisation étant agencés par rapport aux canaux d'entrée (4) dans le corps (1) de façon à distribuer la matière de revêtement amenée par l'intermédiaire des canaux d'entrée (4) et des lumières radiales (34) de la seconde buse (30) de pulvérisation uniformément dans les premier et second intervalles, respectivement.

2. Godet d'enduction selon la revendication 1, caractérisé en ce que les canaux (29, 34) de distribution dans les buses (23, 30) de pulvérisation ont la forme de lumières radiales espacées uniformément le long de la circonférence desdites buses et débouchant dans les évidements tronconiques (25, 32).

3. Godet d'enduction selon la revendication 2, caractérisé en ce que les lumières radiales (29) dans la première buse (23) de pulvérisation sont positionnées par rapport à la lumière (26) de buse de manière que les orifices de sortie de deux desdites lumières soient en alignement axial avec l'axe longitudinal (17) de ladite lumière, et de manière que les orifices de sortie de deux autres desdites lumières soient perpendiculaires à l'axe longitudinal de ladite lumière.

4. Godet d'enduction selon la revendication 2, caractérisé en ce que les lumières radiales (34) de la seconde buse (30) de pulvérisation sont positionnées par rapport à la lumière (33) de buse de manière que les orifices de sortie desdites lumières soient placés sous un angle de 45° avec l'axe longitudinal (17) de ladite lumière.

5. Godet d'enduction selon la revendication 3 ou 4, caractérisé en ce que les première (33) et seconde (30) buses de pulvérisation sont logées sans serrage dans un support cylindrique (18) dans la lumière cylindrique (2a) et sont maintenues centrées dans ledit support au moyen de vis (24, 31).

6. Godet d'enduction selon la revendication 5, caractérisé en ce que la buse (8) de guidage comporte deux parties (8a, 8b), parmi lesquelles la partie (8a), qui est placée entre la première buse (23) de pulvérisation et qui contient la partie (12) faisant saillie coniquement vers l'extérieur, est maintenue et centrée dans la seconde partie (8b) au moyen de vis (16).

7. Godet d'enduction selon l'une quelconque des revendications précédentes, caractérisé en ce que le second intervalle (36) entre lesdites buses de pulvérisation s'évase vers le côté de sortie.

8. Godet d'enduction selon l'une quelconque des revendications précédentes, caractérisé en ce que la partie conique (12 ou 27) faisant saillie vers l'extérieur de la buse de guidage (8) et/ou de la première buse (23) de pulvérisation est biseautée parallèlement à l'axe longitudinal (17) de ladite lumière (11) de guidage ou de la lumière (26) de la buse, respectivement.
